(19) **Europäisches Patentamt / European Patent Office / Office européen des brevets**

(11) **EP 1 568 972 B1**

(12) **EUROPEAN PATENT SPECIFICATION**

(45) Date of publication and mention
of the grant of the patent:
**04.10.2017 Bulletin 2017/40**

(51) Int Cl.:
**G01F 1/66** (2006.01)

(21) Application number: **05003985.8**

(22) Date of filing: **24.02.2005**

(54) **Flow rate processor for use in a doppler ultrasonic flowmeter**

Durchflussprozessor für Doppler-Ultraschallströmungsmesser

Processeur pour débitmètre ultrasonore à effet doppler

(84) Designated Contracting States:
**CH DE FR GB IT LI**

(30) Priority: **27.02.2004 JP 2004054264**

(43) Date of publication of application:
**31.08.2005 Bulletin 2005/35**

(73) Proprietor: **Fuji Electric Co., Ltd.**
**Kawasaki-shi, Kanagawa 210-9530 (JP)**

(72) Inventors:
• **Yamada, Kazuyuki**
**Kanagawa 210-9530 (JP)**
• **Ohmuro, Yoshinori**
**Kanagawa 210-9530 (JP)**
• **Hirayama, Noritomo**
**Kanagawa 210-9530 (JP)**
• **Kishiro, Masami**
**Kanagawa 210-9530 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A- 1 701 139    JP-A- 2004 061 109**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a Doppler ultrasonic flow meter and, more particularly, to a flow rate processor for the flow meter.

A clamp-on ultrasonic flow meter is a flow meter of a type measuring, from outside of a tubular body exemplified by a water pipe, by means of an ultrasonic transducer (module for transmitting/receiving ultrasonic pulses of arbitrary frequency) the flow velocity and the flow rate of a fluid that flows inside of the tubular body, wherein the ultrasonic transducer is attached to a part of the outer surface of the tubular body. Such clamp-on ultrasonic flow meters may be roughly classified into a transit time type and a Doppler type.

The transit time type uses a method in which ultrasonic waves are made to go back and forth on a path that crosses the fluid flowing inside of the tubular body along a diagonal line, and the flow rate of the fluid is measured from the difference of time taken for the ultrasonic waves to transit the outward path and the return path, respectively.

On the other hand, the Doppler type is based on a method in which reflectors (i.e., suspended particles, air bubbles, or others) included in the fluid are presumed to move at the same speed as the fluid, and the flow rate of the fluid is measured from the moving speed of these reflectors. Due to the fact that, through transmission of ultrasonic waves into the fluid, the frequency of the ultrasonic waves reflected by the reflectors is changed by the Doppler effect, the flow velocity of the fluid can be calculated based on the resulting frequency shift, and the flow rate of the fluid is calculated by integration of the flow velocity distribution.

Such a conventional technology for the Doppler ultrasonic flow meter is disclosed in JP-A-2000-97742. This document discloses a Doppler ultrasonic flow meter that allows high-precision measurement without touching the fluid which is in an unsteady state. In JP-A-2000-97742 ultrasonic pulses (a group thereof) are transmitted toward a measurement fluid at required intervals, and ultrasonic echoes as a result of reflection by reflectors located on the measurement line are received. Based thereon, a Doppler shift (frequency shift) is calculated so that a flow velocity distribution is derived for the measurement fluid. Based on the resulting flow velocity distribution, the flow rate is derived by integration, whereby flow rate measurement is achieved.

EP 1701139 A1, falling within the terms of Art. 54(3) EPC, also discloses an ultrasonic flowmeter comprising: a graph output means for outputting a flow velocity distribution graph displaying the flow velocity in two axes of positions in the inner diameter direction of the fluid pipe relating to the measuring line and fluid velocities corresponding to the inner diameter direction; and an inner wall position calculating means for calculating the position of the inner wall with respect to the axis in the inner diameter direction; in which the flow rate operation means measures the flow rate of a fluid to be measured by integral operation based on the inner wall position calculated by the inner wall position calculating means.

JP2004061109 A discloses Doppler-type ultrasonic flowmeter with a flow velocity range switching means, which doubles the measurement range of the positive flow velocity for the fluid velocity distribution measurement means, according to the selection of a user, when the user confirms that the negative value does not exist in the flow velocity distribution by perusing the flow velocity distribution and the zero point.

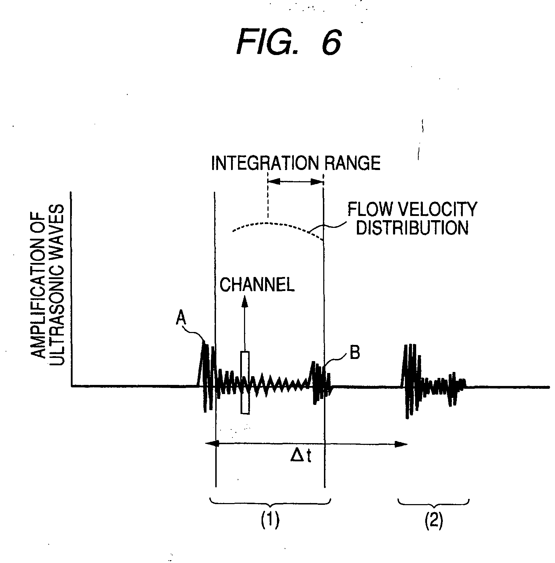

Referring to FIG. 6, the flow velocity distribution and flow rate computation are both described.

In FIG. 6, a group of echoes indicated by (1) in the drawing are reflections of a certain transmission pulse, and a group of echoes indicated by (2) in the drawing are reflections of a successively transmitted pulse. In FIG. 6, Δt denotes the repetition period (pulse repetition period) of the transmission pulses. The echoes partially show a large amplitude at parts of A and B. Part A indicates the echoes as a result of reflection on the entrance wall of the tube, and part B indicates echoes as a result of reflection on the opposite wall of the tube. The part between A and B indicates the part along the measurement line (travel path of ultrasonic waves) inside of the tube. By measuring the amount of Doppler shift of the echoes at respective positions between these parts A and B, the flow velocity of the fluid can be measured at positions on the measurement line corresponding to these positions. In this manner, calculating the flow velocity at the respective positions can successfully lead to the flow velocity distribution as shown in the drawing, for example.

Note here that the flow velocity distribution can be derived by repeatedly executing, tens and hundreds of times, the process of calculating the flow velocity based on the received echoes. Note also that the measurement line has an angle θf with respect to the normal to the tube axis, and actually, the positions on the measurement line are transformed to positions on the cross section of the tube using the angle of θf.

The flow velocity distribution derived as such is then subjected to an integration process so that the flow rate can be obtained. Not the flow velocity distribution in its entirety, but only part of it, an integration range, is subjected to the integration process as shown in the drawing. For example, the integration range is the range from the center of the tube (tube axis) to the opposite wall.

An arbitrary length of the measurement line is divided into an arbitrary number of sections, and each section is referred to as a channel. For example, in a case where the division number is 50, it means that there are 50 channels (this division number and, hence, the number of channels determines the spatial resolution of the measurement). The flow velocity is thus derived per channel, and the points of the flow velocity distribution shown in FIG. 6 respectively represent the channel position and the flow velocity thereof.

The sound velocity and the distance for the ultrasonic waves to travel in the tube wall and in the fluid are known in advance. Thus, based on these parameters, in the echo waveform shown in FIG. 6, calculation can be made in advance to obtain the correspondence between data timing and a channel position. To be specific, the time taken for transmission and reception is calculated in advance for each of the channel positions on the cross section of the tube, and the thus derived correspondence between the channel position and the time can be stored.

As described above, the flow velocity distribution is used as a basis to calculate the flow rate through an integration process. Therefore, the integration range has a large influence on the measurement precision for the flow rate. Unfortunately, a quantization error generally occurs with respect to the spatial resolution, i.e., the channel positions. Due to the quantization error an integration error occurs and results in a measurement error.

An object of the present invention is to provide a flow rate processor for a Doppler ultrasonic flow meter that is capable of obtaining the flow rate with a high precision and not influenced by a quantization error of the spatial resolution.

This object is achieved by a flow rate processor as claimed in claim 1 and a Doppler ultrasonic flow meter using it as claimed in claim 3 and a corresponding method as claimed in claim 4. A preferred embodiment of the invention is subject-matter of dependent claim 2. In accordance with the claims flow rate processor, the flow rate is calculated by means of an equation in which a quantization error of the spatial resolution is corrected. Accordingly, this eliminates the integration error, thereby leading to a flow rate measurement with a high precision.

A preferred embodiment of the present invention will be described in detail below by reference to the accompanying drawings, in which:

FIG. 1    shows the schematic structure of a Doppler ultrasonic flow meter including the flow rate processor according to the preferred embodiment;

FIG. 2    is a diagram for illustrating a quantization error of the spatial resolution;

FIG. 3    is a diagram for illustrating a method of correcting a flow rate calculation equation;

FIG. 4    is a diagram for illustrating a channel;

FIG. 5    shows an exemplary result of an experiment; and

FIG. 6    is a diagram for illustrating a conventional flow velocity distribution and flow rate computation.

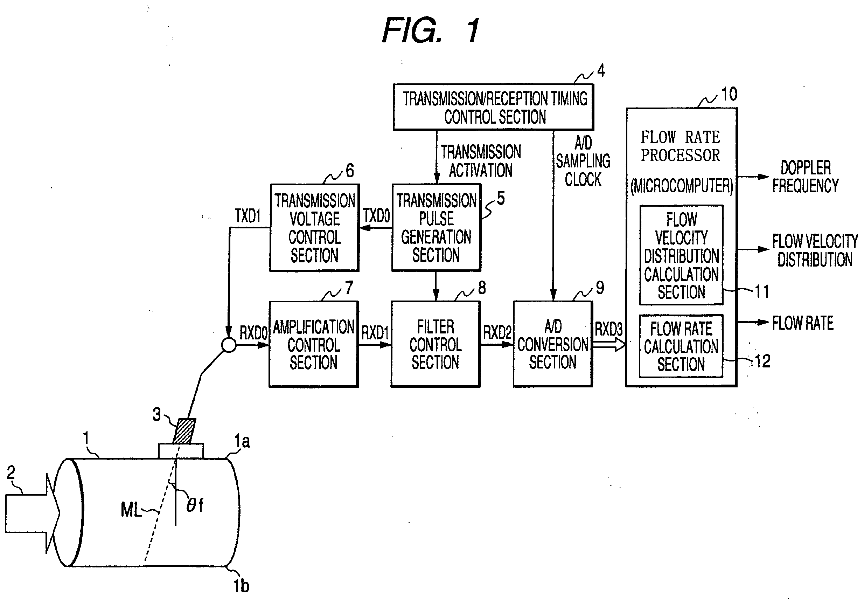

FIG. 1 is a diagram showing the schematic structure of a Doppler ultrasonic flow meter according to a preferred embodiment of the present invention.

The Doppler ultrasonic flow meter shown in the drawing includes an ultrasonic transducer 3, an ultrasonic wave transmission/reception section and a flow rate processor 10. The ultrasonic wave transmission/reception section includes a transmission/reception timing control section 4, a transmission pulse generation section 5, a transmission voltage control section 6, an amplification section 7, a filter section 8, and an A/D conversion section 9. The flow rate processor 10 is exemplified by a microcomputer (CPU/MPU), and includes a flow velocity distribution calculation section 11, and a flow rate calculation section 12 that are preferably implemented by the microcomputer executing a predetermined program that is stored in an internal or external storage device such as a memory, which is not shown in the drawing. Moreover, any data needed for such program execution is also stored in the storage device.

As will be described below, the ultrasonic wave transmission/reception section forwards ultrasonic pulses to a measurement fluid 2 in a tube 1 with an arbitrary repetition frequency, and receives ultrasonic echoes that are reflections at a reflector or the tube inner wall. Doppler shift components are extracted and subjected to A/D conversion. Note here that the Doppler ultrasonic flow meter shown in the drawing is the above-described clamp-on ultrasonic flow meter.

The above-described ultrasonic pulse is repeatedly transmitted with any predetermined pulse repetition interval. This pulse repetition interval is under the control of the transmission/reception timing control section 4. That is, the transmission/reception timing control section 4 follows the pulse repetition interval of its own to instruct the transmission pulse generation section 5 to generate a transmission pulse every time a pulse transmission timing comes. The transmission pulse generation section 5 has a quartz oscillator that generates an electric signal TXD0 of a predetermined frequency f0, and forwards the electric signal TXD0 (transmission pulse) to the transmission voltage control section 6 responding to the instruction. The transmission voltage control section 6 changes the voltage of the electric signal TXD0 to a predetermined voltage (transmission voltage), and forwards the resulting electric signal TXD1 to the ultrasonic transducer 3. In this manner, the ultrasonic transducer 3 transmits into the tube 1 an ultrasonic pulse of an amplitude corresponding to the transmission voltage.

The ultrasonic transducer 3 is a transmitter/receiver for ultrasonic pulses, and the ultrasonic pulses provided from the above-described ultrasonic transducer 3 are to enter the fluid 2 flowing inside of the tube 1 with an angle θf with respect to the normal to the tube axis in the upstream direction of the fluid 2. These ultrasonic pulses are go-straight beams with little divergence, whose width is about 5 mm, for example. The ultrasonic pulses travel along a measurement line ML shown in the drawing. Note here that in FIG. 1, the tube wall of the tube 1, to which the ultrasonic transducer 3 is attached, is shown as a tube wall 1a (entrance wall), and the other tube wall on the opposite side is shown as a tube wall 1b (opposite wall). Herein, the tube's internal diameter is denoted D.

After receiving ultrasonic echoes as a result of the above-described ultrasonic pulses reflected by reflectors (e.g., air bubbles, foreign substances) included in the fluid 2, the ultrasonic transducer 3 converts those into electric signals, and forwards the resulting echo signals RXD0 to the amplification section 7.

These echo signals RXD0 are low in voltage level, and by the amplification section 7, they are amplified with a predetermined amplification factor. After amplification, the resulting echo signals, i.e., amplification-controlled signals RXD1, are forwarded to the filter section 8.

The filter section 8 subjects the signals RXD1 to separation into transmission frequency components and Doppler shift components. Thereafter, only the Doppler shift components are extracted using a low-pass filter. Thus extracted Doppler shift components are filtered signals RXD2, and they are forwarded to the A/D conversion section 9. The A/D conversion section 9 subjects the filtered signals RXD2 to A/D conversion based on a predetermined sampling clock, and passes the resulting A/D-converted signals RXD3 (digital data) to the flow rate processor 10. Here, the sampling clock of the A/D conversion section 9 is generated and output by the transmission/reception timing control section 4, and input to the A/D conversion section 9.

Regardless of the fact that it uses conventional technology, the filter section 8 is described here in detail. First of all, with respect to the frequency of the transmission pulses, the frequency of the echoes shifts in accordance with the flow velocity (speed of the reflectors) of the fluid (Doppler shift). Assuming here that the transmission pulses have a frequency of 900 kHz, and the echoes have a frequency of 902 kHz, the frequency shift, which is usually referred to as the Doppler frequency, will be 2 kHz. In the above-described filter section 8, signal components of the Doppler frequency (Doppler shift components) are extracted. To extract the Doppler shift components, the frequency of the transmitted ultrasonic pulses is combined with the frequency of the received echoes, and then the transmission frequency components are filtered. To be more specific, for such component extraction, applied is a method of deriving analysis signals by orthogonal detection. In the method, with respect to the echo waves, multiplication is performed to sine components and cosine components of the transmission frequency so as to separate the echo waves into transmission frequency components and Doppler shift components. Thereafter, a low-pass filter is used to extract only the Doppler shift components.

Then, signals of thus extracted Doppler shift components are converted into digital data in the A/D conversion section 9 prior to input into the flow rate processor 10. From the Doppler shift components (cosine, sine), the flow rate processor 10 calculates the change of phase angle in a predetermined period, and using the result, the flow velocity distribution is derived. From the flow velocity, the flow rate is derived by integration.

Note here that the transmission frequency is on the order of hundreds of kHz to a few MHz, and the Doppler frequency is on the order of a few kHz or less.

After the flow rate processor 10 receives the output from the A/D conversion section 9, the flow velocity distribution calculation section 11 first computes the flow velocity distribution of a measurement range along the above-described measurement line ML. Based on the calculated flow velocity distribution, specifically of a predetermined integration range thereof, the flow rate computation processing section 12 performs integration to calculate the flow rate. In the present invention, although the flow velocity distribution calculation section 11 is the same as the conventional one, the flow rate computation processing section 12 performs flow rate calculation using a flow rate calculation equation in which a quantization error of the spatial resolution is corrected.

The following describes the flow rate calculation equation for use by the flow rate computation processing section 12.

First of all, the conventional flow rate calculation equation in the flow rate computation processing section 12 is described.

In this description, for example, the integration method applies the midpoint rule (also referred to as intermediate coordinate system), and the integration range covers the range from the tube center (tube axis) to the opposite wall 1b. The number of channels found in such an integration range is assumed to be N+1 including channel 0 to channel N. As such, the flow rate computation processing section 12 is assumed to calculate the flow rate Q using the equation (1) below, for example.

$$Q = 2\pi \int_0^{D/2} v(r) \cdot r \cdot dr = 2\pi \sum_{i=0}^{N} v_i \cdot r_i \cdot \Delta r_i = \sum_{i=0}^{N} \underbrace{(2\pi \cdot r_i \cdot \Delta r_i)}_{\text{Flow rate conversion factor}} \cdot v_i \qquad (1)$$

$v(r)$: Flow velocity at radius r from tube axis,

$v_i$: Flow velocity of channel i,

$r_i$: Distance from tube axis to center of channel i,

$\Delta r$: Width of channel 1,

D: inner tube diameter.

As will be appreciated from equation (1), the flow rate in a specific channel is derived by calculating, for the respective channel, the area of the tube cross section occupied by the corresponding channel, and the thus calculated area is multiplied by the flow velocity of the channel. Then, the flow rates of all channels are added together.

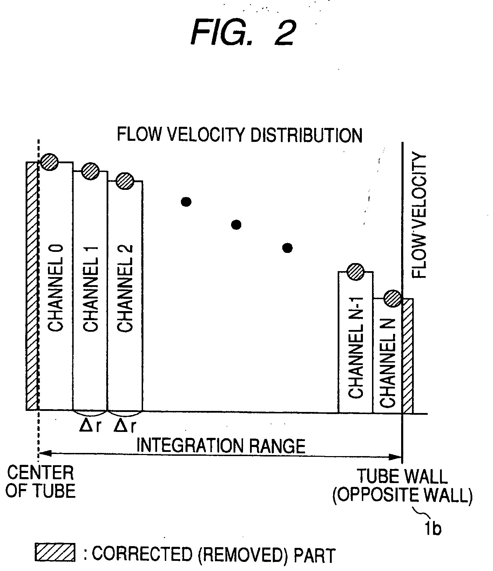

As shown in FIG. 2, only part of the areas of the channels located at both ends in the integration range (channel 0 and channel N), may fall in the integration range. With this being the case, the flow rate Q obtained by using the above equation (1) will include areas that are not part of the integration range. As a result, the calculation result will show a higher flow rate than the actual flow rate. This error is here referred to as quantization error of the spatial resolution (or integration error resulting therefrom).

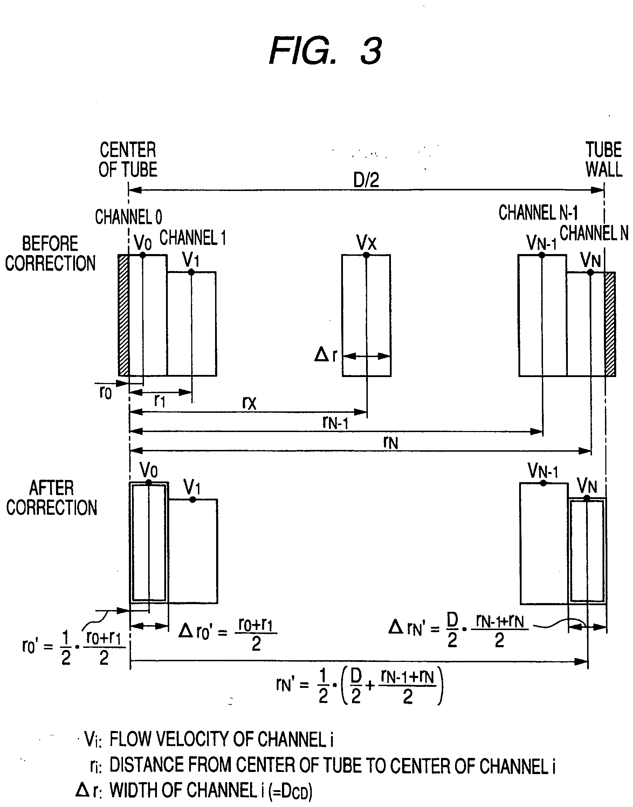

In the present invention, the above-described equation (1) is corrected in such a manner that any region of the two channels at the starting position and the end position of the integration range that is not part of the integration range is not considered. The correction is described below by reference to FIG. 3.

First of all, the channel 0 (the start channel) is described. In this example, as shown in FIG. 3, the distance from the center of the tube to the center of the channel 0 is $r_0$. In other words, the area of the channel 0 that is not part of the integration range (the shaded area in the drawing) has the length $(\Delta r_0/2)-r_0$, $\Delta r_0$ being the width of the channel 0. How to determine which channel is the channel 0 and what is the value of $r_0$ will be described next.

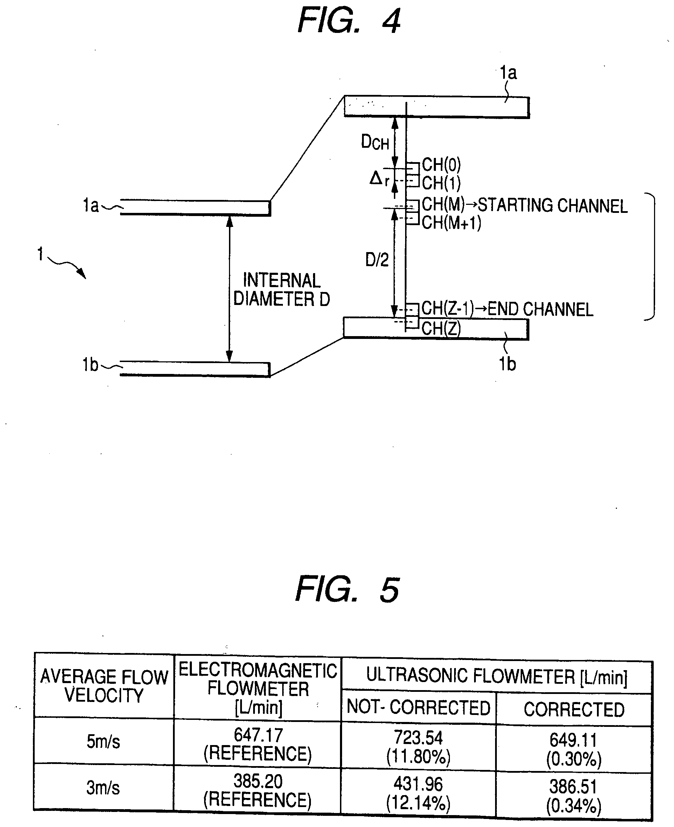

First of all, as an input parameter, the distance $D_{CH}$ from the entrance wall 1a to a capture starting position is input. The capture starting position is a starting position for measurement of the flow velocity distribution, and may be arbitrarily chosen. As explained with reference to the prior art above, the flow velocity is measured also for a channel or channels that does (do) not fall in the integration range. As shown in FIG. 4, for example, channel setting is so made that the center of a channel is at a position having the distance $D_{CH}$ from the entrance wall 1a, and the resulting channel is regarded as the measurement starting channel for the flow velocity distribution (CH(0) in the drawing). From the channel CH(0), channel setting is continued at $\Delta r$ intervals until the opposite wall 1b is reached. That is, CH(0) to CH(Z) shown in FIG. 4 are set. (Z+1) is the number of channels into which the measurement range is divided. By calculating the flow velocity for each channel, the flow velocity distribution can be derived. However, the flow rate is calculated using the flow velocities only of the channels located in the integration range. As described in the foregoing, in this embodiment the integration range covers the area having the length D/2 from the center of the tube to the opposite wall. Accordingly, in the FIG. 4 example, CH(M) is the starting channel of the integration range, and this is the channel 0 in FIGS. 2 and 3. Note here that the reason why M is replaced with 0 is for application to the above equation (1).

Through use of the above-described distance $D_{CH}$ and $\Delta r$, the distance $CH_D(X)$ from the entrance wall 1a to the center of the respective channels can be derived from the following equation (2):

$$CH_D(X) = D_{CH} + \Delta r \times X \tag{2}$$

X is the index of the channels CH(0) to CH(Z) in the measurement range, $0 \leq X \leq Z$. The channel whose $CH_D(X)$ satisfies the following conditional equation (3) is the starting channel of the above-described integration range (CH(M) in FIG. 4, and Channel 0 in FIG. 3). The end channel of the integration range can also be derived from the conditional equation when D is substituted for D/2 in the conditional equation (3):

$$D/2 - \Delta r/2 \leq CH_D(X) \leq D/2 + \Delta r/2 \tag{3}$$

In the example of FIG. 4, $CH_D(M)$ satisfies this conditional equation (3), and thus the following equation (4) will lead to $r_0$:

$$r_0 = CH_D(M) - D/2 \tag{4}$$

Further, $r_i$ in the above-described equation (1) can be derived from

$$r_i = r_0 + \Delta r \times i \tag{5}$$

i is the index of channels in the integration range, $0 \le i \le N$. Using $r_0$ from equation (4) and the distance $r_1$ from the center of the tube to the center of the next channel (channel 1), $r_1 = r_0 + \Delta r$, the width $\Delta r_0'$ and the center position $r_0'$ of that part of channel 0 that is in the integration range (the non-shaded area in the drawing) are obtained through the following equations (6) and (7):

$$\Delta r_0' = (r_0 + r_1)/2 \tag{6}$$

$$r_0' = 0.5 \times (r_0 + r_1)/2 \tag{7}$$

Considering now the end channel (channel N), if , as shown in FIG. 3, the distance from the center of the tube to the center of the channel N is denoted $r_N$, and the distance from the center of the tube to the center of the previous channel N-1 is denoted $r_{N-1}$ (these values can be derived as described in the above), the width $\Delta r_N'$ and the center position $r_N'$ of that part of the channel N that falls in the integration range (the non-shaded area in the drawing), are obtained as follows:

$$\Delta r_N' = \frac{D}{2} - \frac{r_{N-1} + r_N}{2}$$

$$r_N' = \frac{1}{2}\left(\frac{D}{2} + \frac{r_{N-1} + r_N}{2}\right)$$

If the above-described equation (1) is corrected based on the results derived as above, the resulting flow rate calculation equation after correction will be the following equation (8):

$$Q = 2\pi\left(v_0 \cdot r_0' \cdot \Delta r_0' + \sum_{i=1}^{N-1} v_i \cdot r_i \cdot \Delta r_i + v_N \cdot r_N' \cdot \Delta r_N'\right)$$

$$= 2\pi\left[v_0 \cdot \underbrace{\left(\frac{1}{2} \cdot \frac{r_0 + r_i}{2} \cdot \frac{r_0 + r_i}{2}\right)}_{\text{Flow rate coefficient of starting channel}} + \sum_{i=1}^{N-1} \underbrace{(r_i \cdot \Delta r_i \cdot v_i)}_{\text{Flow rate conversion factor}} + \right.$$

$$\left. v_N \cdot \underbrace{\left(\frac{1}{2} \cdot \left(\frac{D}{2} + \frac{r_{N-1} + r_N}{2}\right)\right) \cdot \left(\frac{D}{2} \frac{r_{N-1} + r_N}{2}\right)}_{\text{Flow rate coefficient of end channel}}\right] \tag{8}$$

That is the calculation is modified such that for the channel at the starting position of the integration range and that at the end position thereof, the area of that part of the respective channel that is outside of the integration range is not taken into consideration.

The flow rate computation processing section 12 calculates the flow rate using the equation (8). Accordingly, with no influence by quantization errors of the spatial resolution, the flow rate measurement can be performed with a high precision.

FIG. 5 shows exemplary results derived through experiments.

With this experiment, a tube having an internal diameter D of 50 mm was used, the fluid flowing inside of the tube was water, and the division number (the number of channels) is 40. For the fluid flowing with the average flow velocity of 5 m/s and that of 3 m/s, the flow rate computation processing section 12 measured the flow rate using the corresponding flow rate calculation equation, i.e., corrected and not corrected, respectively. Moreover, an electromagnetic flow meter was used as a reference meter.

As shown in the drawing, in the case where the average flow velocity was 5 m/s, the flow rate measurement result using the electromagnetic flow meter was 647.17 L/min, and the result using the not-corrected equation was 723.54 L/min. The error was 11.80 %. On the other hand, the result using the corrected equation was 649.11 L/min with little error (about 0.3 %). Almost the same result was obtained for the average flow velocity of 3 m/s.

Hence, if the corrected flow rate calculation equation (8) is used, the flow rate measurement can be performed with a very high precision. By the way, in spite of the advantage of achieving a flow rate measurement with a high precision, the electromagnetic flow meter not being clamp-on type has the drawback of requiring time and effort for placement and being expensive.

Note here that described above is the case of applying the midpoint rule as the integration method. It goes without saying that this is only an example and any other integration method (trapezoidal rule, Simpson's rule) may be used as well.

**Claims**

1. Flow rate processor for use in a Doppler ultrasonic flow meter for measuring, using an ultrasonic Doppler shift, the flow rate of a measurement fluid (2) that flows inside of a tube (1), comprising:

   means for receiving Doppler shift components extracted from ultrasonic echoes;
   flow velocity distribution calculation means (11) for calculating the flow velocity distribution of the measurement fluid (2) along a measurement line (ML) based on said Doppler shift components; and
   flow rate calculation means (12) for integrating, over a predetermined integration range, the flow velocity distribution to calculate the flow rate;
   **characterized in that** said flow rate calculation means (12) is adapted to perform said integration using a corrected equation in which a quantization error of a spatial resolution of the velocity distribution is corrected wherein said flow velocity distribution calculation means (11) is adapted to divide a measurement range of said measurement line (ML) into a number of channels and to calculate the flow velocity for each channel, the predetermined integration range being defined as a range from a starting position to an end position with at least one of the starting position and the end position being inside a respective channel, and said corrected equation is an equation that gives consideration only to the regions of the channels that extend from said starting position to said end position neglecting any region of the channel at the starting position that lies before that starting position and any region of the channel at the end position that lies after the end position.

2. The processor according to claim 1, **characterized in that** the flow rate Q is calculated by the following equation:

$$Q = 2\pi \left( v_0 \cdot r_0' \cdot \Delta r_0' + \sum_{i=1}^{N-1} v_i \cdot r_i \cdot \Delta r_i + v_N \cdot r_N' \cdot \Delta r_N' \right)$$

with

$r_0' = 0.5 \times (r_0 + r_1)/2$ representing the radial distance of the starting position of the integration range from the tube axis,

$\Delta r_0' = (r_0 + r_1)/2$ representing a corrected width of the first channel, $r_N' = \dfrac{1}{2}\left( \dfrac{D}{2} + \dfrac{r_{N-1} + r_N}{2} \right)$ representing the radial distance of the end position of the integration range from the tube axis, and

$\Delta r_N' = \dfrac{D}{2} - \dfrac{r_{N-1} + r_N}{2}$ representing a corrected width of the last channel,

and

   $v_0$: flow velocity of the first channel of the integration range,
   $r_0$: radial distance from the tube axis to the center of the first channel
   $r_1$: radial distance from the tube axis to the center of the second channel
   $v_i$: flow velocity of the i-th channel of the integration range of the integration range
   $r_i$: radial distance from the tube axis to the center of the i-th channel of the integration range

$r_{N-1}$: radial distance from the tube axis to the center of the (N-1)-th channel of the integration range
$r_N$: radial distance from the tube axis to the center of the last channel of the integration range
$\Delta_i$: width of the channels
D: diameter of the tube (1).

**3.** A Doppler ultrasonic flow meter for measuring, using an ultrasonic Doppler shift, the flow rate of a measurement fluid (2) that flows inside of a tube (1), comprising:

ultrasonic wave transmission/reception means (3, 5-9) for successively transmitting into the tube (1) ultrasonic pulses at a predetermined pulse repetition frequency so as to cross the measurement fluid (2) along a measurement line (ML), for receiving the resulting ultrasonic echoes, and for extracting Doppler shift components from the received echoes; and
the flow rate processor according to claim 1 or claim 2.

**4.** Method for measuring, using an ultrasonic Doppler shift, the flow rate of a measurement fluid (2) that flows inside of a tube (1), comprising the steps of:

receiving Doppler shift components extracted from ultrasonic echoes;
calculating the flow velocity distribution of the measurement fluid (2) along a measurement line (ML) based on said Doppler shift components; and
integrating, over a predetermined integration range, the flow velocity distribution to calculate the flow rate;
**characterized in that** said method further comprising the steps of performing said integration using a corrected equation in which a quantization error of a spatial resolution of the velocity distribution is corrected wherein said step of flow velocity distribution comprises the step of dividing a measurement range of said measurement line (ML) into a number of channels and calculating the flow velocity for each channel, the predetermined integration range being defined as a range from a starting position to an end position with at least one of the starting position and the end position being inside a respective channel, and said corrected equation is an equation that gives consideration only to the regions of the channels that extend from said starting position to said end position neglecting any region of the channel at the starting position that lies before that starting position and any region of the channel at the end position that lies after the end position.

**Patentansprüche**

**1.** Durchflussmengenverarbeitungseinheit zur Verwendung in einem Doppler-Ultraschalldurchflussmessgerät zum Messen der Durchflussmenge eines Messfluids (2), das innerhalb einer Röhre (1) fließt, unter Verwendung einer Ultraschall-Dopplerverschiebung, umfassend:

ein Mittel zum Empfangen von Dopplerverschiebungskomponenten, die aus Ultraschallechos extrahiert werden;
ein Durchflussgeschwindigkeitsverteilungsberechnungsmittel (11) zum Berechnen der Durchflussgeschwindigkeitsverteilung des Messfluids (2) entlang einer Messlinie (ML) auf Basis der Dopplerverschiebungskomponenten; und
ein Durchflussmengenberechnungsmittel (12) zum Integrieren der Durchflussgeschwindigkeitsverteilung über einen vordefinierten Integrationsbereich, um die Durchflussmenge zu berechnen;
**dadurch gekennzeichnet, dass** das Durchflussmengenberechnungsmittel (12) so ausgelegt ist, dass es die Integration unter Verwendung einer korrigierten Gleichung durchführt, bei der ein Quantisierungsfehler einer räumlichen Auflösung der Geschwindigkeitsverteilung korrigiert ist, wobei das Durchflussgeschwindigkeitsverteilungsberechnungsmittel (11) so ausgelegt ist, dass es einen Messbereich der Messlinie (ML) in eine Anzahl von Kanälen teilt und die Durchflussgeschwindigkeit für jeden Kanal berechnet, wobei der vordefinierte Integrationsbereich als Bereich von einer Ausgangsposition zu einer Endposition definiert ist, wobei zumindest eines der Ausgangsposition und der Endposition innerhalb eines jeweiligen Kanals liegt, und wobei die korrigierte Gleichung eine Gleichung ist, die nur die Regionen der Kanäle berücksichtigt, die sich von der Ausgangsposition zur Endposition erstrecken, wobei jedwede Region des Kanals in der Ausgangsposition, die vor dieser Ausgangsposition liegt, und jedwede Region des Kanals in der Endposition, die nach der Endposition liegt, verworfen werden.

**2.** Verarbeitungseinheit nach Anspruch 1, **dadurch gekennzeichnet, dass** die Durchflussmenge Q mit der folgenden Gleichung berechnet wird:

$$Q = 2\pi\left( v_0 \cdot r_0{'} \cdot \Delta r_0{'} + \sum_{i=1}^{N-1} v_i \cdot r_i \cdot \Delta r_i + v_N \cdot r_N{'} \cdot \Delta r_N{'} \right)$$

wobei:

$r_0{'}$ = 0,5 x $(r_0 + r_1)$ / 2 die radiale Distanz der Ausgangsposition des Integrationsbereichs von der Röhrenachse darstellt,

$\Delta r_0{'}$ = $(r_0 + r_1)$/2 eine korrigierte Breite des ersten Kanals darstellt,

$$r_N{'} = \frac{1}{2}\left( \frac{D}{2} + \frac{r_{N-1} + r_N}{2} \right)$$ die radiale Distanz der Endposition, des Integrationsbereichs von der Röhren-achse darstellt, und

$$\Delta r_N{'} = \frac{D}{2} - \frac{r_{N-1} + r_N}{2}$$ eine korrigierte Breite des letzten Kanals darstellt,

und

$v_0$: Durchflussgeschwindigkeit des ersten Kanals des Integrationsbereichs,
$r_0$: radiale Distanz von der Röhrenachse zur Mitte des ersten Kanals
$r_1$: radiale Distanz von der Röhrenachse zur Mitte des zweiten Kanals
$v_i$: Durchflussgeschwindigkeit des i-ten Kanals des Integrationsbereichs des Integrationsbereichs
$r_i$: radiale Distanz von der Röhrenachse zur Mitte des iten Kanals des Integrationsbereichs
$r_{N-1}$: radiale Distanz von der Röhrenachse zur Mitte des (N-1)-ten Kanals des Integrationsbereichs
$r_N$: radiale Distanz von der Röhrenachse zur Mitte des letzten Kanals des Integrationsbereichs
$\Delta_i$: Breite der Kanäle.
$D$: Durchmesser der Röhre (1).

3. Doppler-Ultraschalldurchflussmengenmessgerät zum Messen der Durchflussmenge eines Messfluids (2), das im Inneren einer Röhre (1) fließt, unter Verwendung einer Ultraschall-Dopplerverschiebung, umfassend:

ein Ultraschallwellensende-/Ultraschallwellenempfangsmittel (3, 5-9) zum sukzessiven Senden von Ultraschall-limpulsen in einer vordefinierten Impulswiederholungsfrequenz in die Röhre (1), um das Messfluid (2) entlang einer Messlinie (ML) zu kreuzen, so dass die entstehenden Ultraschallechos empfangen werden und Dopplerverschiebungskomponenten aus den empfangenen Echos extrahiert werden; und
die Durchflussmengenverarbeitungseinheit nach Anspruch 1 oder 2.

4. Verfahren zum Messen der Durchflussmenge eines Messfluids (2), das im Inneren einer Röhre (1) fließt, unter Verwendung einer Ultraschall-Dopplerverschiebung, das die Schritte umfasst:

Empfangen von Dopplerverschiebungskomponenten, die aus Ultraschallechos extrahiert werden;
Berechnen der Durchflussgeschwindigkeitsverteilung des Messfluids (2) entlang einer Messlinie (ML) auf Basis der Dopplerverschiebungskomponenten; und
Integrieren der Durchflussgeschwindigkeitsverteilung über einen vordefinierten Integrationsbereich, um die Durchflussmenge zu berechnen;
**dadurch gekennzeichnet, dass** das Verfahren ferner die Schritte des Durchführens der Integration unter Verwendung einer korrigierten Gleichung, bei der ein Quantisierungsfehler einer räumlichen Auflösung der Geschwindigkeitsverteilung korrigiert ist, umfasst, wobei der Schritt der Durchflussgeschwindigkeitsverteilung den Schritt des Teilens eines Messbereichs der Messlinie (ML) in eine Anzahl von Kanälen teilt und des Berechnens der Durchflussgeschwindigkeit für jeden Kanal umfasst, wobei der vordefinierte Integrationsbereich als Bereich von einer Ausgangsposition zu einer Endposition definiert ist, wobei zumindest eine der Ausgangsposition und der Endposition innerhalb eines jeweiligen Kanals liegt, und wobei die korrigierte Gleichung eine Gleichung ist, die nur die Regionen der Kanäle berücksichtigt, die sich von der Ausgangsposition zur Endposition erstrecken, wobei jedwede Region des Kanals in der Ausgangsposition, die vor dieser Ausgangsposition liegt, und jedwede Region des Kanals in der Endposition, die nach der Endposition liegt, verworfen werden.

**Revendications**

1. Processeur de débit pour une utilisation dans un débitmètre ultrasonore à effet Doppler pour mesurer, à l'aide d'un décalage Doppler ultrasonore, le débit d'un fluide de mesure (2) qui circule à l'intérieur d'un tube (1), comprenant:

   des moyens pour recevoir des composantes de décalage Doppler extraites à partir d'échos ultrasonores ;
   des moyens de calcul de distribution de vitesse de flux (11) pour calculer la distribution de vitesse de flux du fluide de mesure (2) le long d'une ligne de mesure (ML) sur la base desdites composantes de décalage Doppler; et
   des moyens de calcul de débit (12) pour intégrer, sur une plage d'intégration prédéterminée, la distribution de vitesse de flux pour calculer le débit ;
   **caractérisé par le fait que** lesdits moyens de calcul de débit (12) sont conçus pour réaliser ladite intégration à l'aide d'une équation corrigée dans laquelle une erreur de quantification d'une résolution spatiale de la distribution de vitesse est corrigée, lesdits moyens de calcul de distribution de vitesse de flux (11) étant conçus pour diviser une plage de mesure de ladite ligne de mesure (ML) en un certain nombre de canaux et pour calculer la vitesse de flux pour chaque canal, la plage d'intégration prédéterminée étant définie comme une plage depuis une position de départ vers une position de fin avec au moins l'une de la position de départ et de la position de fin qui est à l'intérieur d'un canal respectif, et ladite équation corrigée étant une équation qui prend en considération seulement les régions des canaux qui s'étendent depuis ladite position de départ vers ladite position de fin en négligeant une quelconque région du canal au niveau de la position de départ qui se situe avant cette position de départ et une quelconque région du canal au niveau de la position de fin qui se situe après la position de fin.

2. Processeur selon la revendication 1, **caractérisé par le fait que** le débit Q est calculé par l'équation suivante:

$$Q = 2\pi \left( v_0 \cdot r_0^{'} \cdot \Delta r_0^{'} + \sum_{i=1}^{N-1} v_i \cdot r_i \cdot \Delta r_i + v_N \cdot r_N^{'} \cdot \Delta r_N^{'} \right)$$

   avec

   $r_0$' = 0,5 x $(r_0 + r_1)/2$ représentant la distance radiale de la position de départ de la plage d'intégration à partir de l'axe de tube,
   $\Delta r_0$' = $(r_0 + r_1)/2$ représentant une largeur corrigée du premier canal,

   $$r_N^{'} = \frac{1}{2}\left( \frac{D}{2} + \frac{r_{N-1} + r_N}{2} \right)$$ représentant la distance radiale de la position de fin de la plage d'intégration à partir de l'axe de tube, et

   $$\Delta r_N^{'} = \frac{D}{2} - \frac{r_{N-1} + r_N}{2}$$ représentant une largeur corrigée du dernier canal,

   et

   $v_0$ : vitesse de flux du premier canal de la plage d'intégration,
   $r_0$ : distance radiale à partir de l'axe de tube vers le centre du premier canal
   $r_1$ : distance radiale à partir de l'axe de tube vers le centre du second canal
   $v_i$ : vitesse de flux du $i^{\text{ème}}$ canal de la plage d'intégration de la plage d'intégration
   $r_i$ : distance radiale à partir de l'axe de tube vers le centre du $i^{\text{ème}}$ canal de la plage d'intégration
   $r_{N-1}$ : distance radiale à partir de l'axe de tube vers le centre du $(N-1)^{\text{ème}}$ canal de la plage d'intégration
   $r_N$ : distance radiale à partir de l'axe de tube vers le centre du dernier canal de la plage d'intégration
   $\Delta_i$ : largeur des canaux
   D : diamètre du tube (1).

3. Débitmètre ultrasonore à effet Doppler pour mesurer, à l'aide d'un décalage Doppler ultrasonore, le débit d'un fluide de mesure (2) qui circule à l'intérieur d'un tube (1), comprenant:

   des moyens d'émission/réception d'onde ultrasonore (3, 5-9) pour émettre avec succès dans le tube (1) des impulsions ultrasonores à une fréquence de répétition d'impulsions prédéterminée afin de croiser le fluide de mesure (2) le long d'une ligne de mesure (ML), pour recevoir les échos ultrasonores résultants, et pour extraire des composantes de décalage Doppler à partir des échos reçus ; et

le processeur de débit selon la revendication 1 ou la revendication 2.

4. Procédé pour mesurer, à l'aide d'un décalage Doppler ultrasonore, le débit d'un fluide de mesure (2) qui circule à l'intérieur d'un tube (1), comprenant les étapes consistant à:

recevoir des composantes de décalage Doppler extraites à partir d'échos ultrasonores ;

calculer la distribution de vitesse de flux du fluide de mesure (2) le long d'une ligne de mesure (ML) sur la base desdites composantes de décalage Doppler ; et

intégrer, sur une plage d'intégration prédéterminée, la distribution de vitesse de flux pour calculer le débit ; **caractérisé par le fait que** ledit procédé comprend en outre les étapes consistant à réaliser ladite intégration à l'aide d'une équation corrigée dans laquelle une erreur de quantification d'une résolution spatiale de la distribution de vitesse est corrigée, ladite étape de distribution de vitesse de flux comprenant l'étape consistant à diviser une plage de mesure de ladite ligne de mesure (ML) en un certain nombre de canaux et à calculer la vitesse de flux pour chaque canal, la plage d'intégration prédéterminée étant définie comme une plage depuis une position de départ vers une position de fin avec au moins l'une de la position de départ et de la position de fin qui est à l'intérieur d'un canal respectif, et ladite équation corrigée étant une équation qui prend en considération seulement les régions des canaux qui s'étendent depuis ladite position de départ vers ladite position de fin en négligeant une quelconque région du canal au niveau de la position de départ qui se situe avant cette position de départ et une quelconque région du canal au niveau de la position de fin qui se situe après la position de fin.

# FIG. 1

TRANSMISSION/RECEPTION TIMING CONTROL SECTION 4

FLOW RATE PROCESSOR (MICROCOMPUTER) 10

TRANSMISSION ACTIVATION

A/D SAMPLING CLOCK

TRANSMISSION VOLTAGE CONTROL SECTION 6

TRANSMISSION PULSE GENERATION SECTION 5

FLOW VELOCITY DISTRIBUTION CALCULATION SECTION 11

DOPPLER FREQUENCY

FLOW VELOCITY DISTRIBUTION

TXD1

TXD0

RXD0

AMPLIFICATION CONTROL SECTION 7

RXD1

FILTER CONTROL SECTION 8

RXD2

A/D CONVERSION SECTION 9

RXD3

FLOW RATE CALCULATION SECTION 12

FLOW RATE

ML

$\theta$ f

1  1a  2  3  1b

EP 1 568 972 B1

# FIG. 2

FLOW VELOCITY DISTRIBUTION

CENTER
OF TUBE

ΔrΔr INTEGRATION RANGE

CHANNEL 0 CHANNEL 1 CHANNEL 2

CHANNEL N-1 CHANNEL N

TUBE WALL
(OPPOSITE WALL)
1b

FLOW VELOCITY

: CORRECTED (REMOVED) PART

# FIG. 3

$V_i$: FLOW VELOCITY OF CHANNEL i

$r_i$: DISTANCE FROM CENTER OF TUBE TO CENTER OF CHANNEL i

$\Delta r$: WIDTH OF CHANNEL i (=$D_{CD}$)

## FIG. 4

## FIG. 5

| AVERAGE FLOW VELOCITY | ELECTROMAGNETIC FLOWMETER [L/min] | ULTRASONIC FLOWMETER [L/min] | |
|---|---|---|---|
| | | NOT-CORRECTED | CORRECTED |
| 5m/s | 647.17 (REFERENCE) | 723.54 (11.80%) | 649.11 (0.30%) |
| 3m/s | 385.20 (REFERENCE) | 431.96 (12.14%) | 386.51 (0.34%) |

# FIG. 6

INTEGRATION RANGE

FLOW VELOCITY
DISTRIBUTION

AMPLIFICATION OF
ULTRASONIC WAVES

CHANNEL

A

B

Δt

(1)

(2)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000097742 A
- EP 1701139 A1

- JP 2004061109 A